# EUROPÄISCHE PATENTSCHRIFT

(11) **EP 1 763 449 B1**
(45) Veröffentlichungstag und Bekanntmachung des Hinweises auf die Patenterteilung: **06.09.2017**
(21) Anmeldenummer: 05742749.4
(22) Anmeldetag: 12.05.2005
(51) Int. Cl.: B60L 5/00, B65G 1/04

(54) **SPURGEFÜHRTES TRANSPORTSYSTEM**
RAIL-GUIDED TRANSPORT SYSTEM
SYSTEME DE TRANSPORT GUIDE

(30) Priorität: 29.06.2004 DE 102004031581
(43) Veröffentlichungstag der Anmeldung: 21.03.2007
(73) Patentinhaber: SEW-EURODRIVE GmbH & Co. KG, 76646 Bruchsal (DE)
(72) Erfinder: SCHMIDT, Josef, 76676 Graben-Neudorf (DE)
(74) Vertreter: Tüngler, Eberhard
(86) Internationale Anmeldenummer: PCT/EP2005/005137
(87) Internationale Veröffentlichungsnummer: WO 2006/002711

(56) Entgegenhaltungen:
- WO-A-96/31381
- DE-A- 19 626 966
- GB-A- 1 307 519
- JP-A- 03 216 979
- US-A- 3 955 129

## Beschreibung

Die Erfindung betrifft ein spurgeführtes Transportsystem.

Aus der DE 197 35 624 C1 ist ein Verfahren bekannt zur berührungslosen Energieübertragung elektrischer Leistung aus einer Mittelfrequenzstromquelle mit einer Mittelfrequenz f_{M} auf einen oder mehrere bewegte Verbraucher über eine Übertragungsstrecke und aus den bewegten Verbrauchern zugeordneten Übertragerköpfen mit nachgeschaltetem Anpasssteller zum Einstellen der von der Übertragungsstrecke aufgenommenen Leistung, wobei die Übertragungsstrecke von der Mittelfrequenzstromquelle mit einem während der Leistungsübertragung in seinem Effektivwert konstanten Mittelfrequenzstrom gespeist wird.

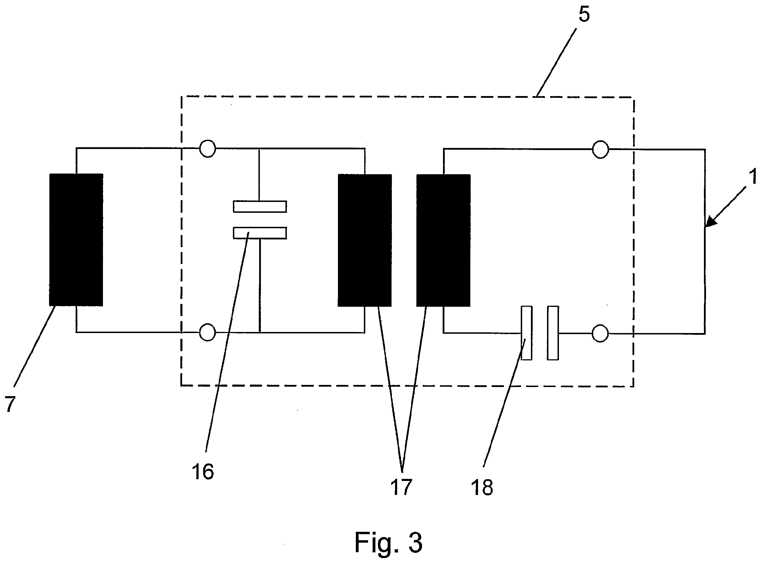

Der Anpasssteller wandelt den aus dem Übertragerkopf eingeprägten mittelfrequenten Strom in eine Gleichspannung. Wie in den Figuren 3, 7a und 7b und zugehöriger Beschreibung der DE 197 35 624 C1 beschrieben, wird der Schalter Tₛ synchron zum Verlauf und mit der doppelten Frequenz des Eingangsstroms des Anpassstellers betrieben. Ein erheblicher Nachteil ist jedoch, dass diese hohe Schaltfrequenz 2 f_{M} hohe Schaltverluste zur Folge hat. Ein weiterer Nachteil ist, dass sich das synchrone Prinzip nicht mehr aufrecht erhalten lässt bei Verwendung mehrerer asynchron arbeitender Einspeisungen zur Versorgung eines Anpassstellers.

Aus der DE 100 53 373 A1 ist ein Verfahren bekannt, das im Gegensatz zur DE 197 35 624 C1 asynchron betrieben wird und geringere Schaltverluste aufweist.

Aus der DE 33 42 184 A1 ist eine Fördereinrichtung bekannt, die Führungsschienen umfasst und kurvengängig mit einer Zwangslenkung ist.

Aus der DE 198 49 276 C2 ist ein Verfahren zum Durchfahren einer Strecke mit einem kurvengängigen Regalförderfahrzeug für ein Regallager bekannt. Solche Systeme werden mit einer Schleifleitung versorgt, die nicht verschleißfrei arbeitet.

Aus der Seite http://www.sew-eurodrive.de/deutsch/03 produkte/index produkte.htm sind Regallager und zugehörige Regalbediengeräte bekannt.

Aus dem Flyer der Firma SEW-EURODRIVE GmbH & Co. KG "Produktankündigung, MOVITRANS sind ebenfalls Systemkomponenten bekannt, wobei der Übertragerkopf als Pick UP bezeichnet wird und an einen Anpasssteller angeschlossen ist, welcher eine Versorgungsspannung für eine Last zur Verfügung stellt.

Aus der DE 196 26 966 A1 ist ein Transportsystem mit Satellitenfahrzeugen bekannt, bei dem das Hauptfahrzeug berührungslos mit Energie versorgt ist. Außerdem werden die Satellitenfahrzeuge ebenfalls berührungslos mit Energie versorgt. Nachteilig ist dabei, dass das Satellitenfahrzeug eine hohe Bauhöhe hat wegen des Raumbedarfs der U-förmigen Übertragerköpfe. Außerdem sind sowohl in der Hauptstrecke als auch in den Seitengassen beziehungsweise Regalen Primärkreise, also beispielsweise Linienleiter, verlegt, welche ständig bestromt werden müssen. Somit sind die Abstrahlungsverluste groß.

Aus dem Prospekt Planar E-Kerne für SMPS, also Schaltnetzteile, der Firma Kaschke KG aus dem Jahr 2003 sind E-förmige Planar-Kerne bekannt.

Aus der EP 0 961 743 B1 ist ein Transportsystem bekannt, bei dem gemäß Spalte 6, Absatz [0020] die Informationsübertragung zwischen einer festen Station, einem Satellitenfahrzeug und einem Trägerfahrzeug über Funk vorgesehen ist. Nachteiligerweise ist die Funkübertragung allerdings nur dann verwendbar, wenn keine Reflexionen oder toten Winkel für die Funkwellen vorhanden sind. Alternativ wird ein geschlitztes Koaxialkabel vorgeschlagen, was aufwendig und kostspielig bei der Verlegung innerhalb der Anlage ist. Außerdem benötigt die notwendige Patch-Antenne Bauraum.

Aus der JP 03 216979 A ist ein Transportsystem bekannt, in welchem die Satellitenfahrstrecken Primärleiter umfassen, die aus dem Hauptfahrzeug mit Energie versorgt sind.

Aus der US 3 955 129 A ist ein System zur simultanen Steuerung einiger elektrischer Spielzeuge mittels eines einzigen Schaltkreises bekannt.

Aus der GB 1 307 519 A ist eine Fernsteuerung bekannt.

Aus der WO 96/31381 A ist eine spurgeführte Transporteinrichtung mit Energie- und Informationsübertragung bekannt.

Der Erfindung liegt daher die Aufgabe zugrunde, ein Regallager und zugehöriges Regalbediengerät weiterzubilden, das gut steuerbar, kostengünstig und kompakt ausführbar ist.

Erfindungsgemäß wird die Aufgabe durch das Transportsystem nach den in Anspruch 1 angegebenen Merkmalen gelöst.

Wesentliche Merkmale der Erfindung bei dem Transportsystem sind, dass es mit wenigstens einer Fahrstrecke aus Trag- und Spurführungselementen ausgeführt ist, auf der wenigstens ein Transportfahrzeug als Hauptfahrzeug geführt ist, das Mittel zum selbsttätigen Fortbewegen längs der Fahrstrecke hat und auf das Energie von einem längs der Fahrstrecke verlegten Primärkreis mit Schleifleitung oder berührungslos übertragen wird,
wobei das Hauptfahrzeug eine Hebebühne umfasst, die von einem Antrieb, insbesondere beispielsweise einem Elektromotor oder Getriebemotor, antreibbar ist und auf der sich mindestens ein Satellitenfahrzeug befindet, das ebenfalls einen Antrieb, wie beispielsweise einem Elektromotor oder Getriebemotor, zum selbsttätigen Fortbewegen längs einer weiteren Fahrstrecke umfasst und zum Gütertransport ausgebildet ist,
wobei die Fahrstrecke einen Satellitenfahrstreckenabschnitt umfasst für die Positionierung und das Parken des Satellitenfahrzeuges,
wobei der Satellitenfahrstreckenabschnitt durch Positionierung des Hauptfahrzeuges auf längs dessen Fahrstrecke, quer zu dieser angeordnete Satellitenfahrstrecken fluchtend ausrichtbar ist, wobei diese Satellitenfahrstrecken auf Regalen angeordnet sind,
wobei Satellitenfahrstreckenabschnitte und Satellitenfahrstrecken Primärleiter umfassen, die berührungslos mit Energie versorgt sind aus dem Hauptfahrzeug.

Von Vorteil ist dabei, dass weniger Verkabelung notwendig ist, die Abstrahlung verringert ist, der Aufwand an Verteilerkästen und zugehörigen elektrischen und elektronischen Komponenten und die Kosten verringert sind. Außerdem ist das Transportsystem kompakt ausführbar. Mittels der Informationsübertragung ist das Regalbediengerät von der zentralen Station gut steuerbar, da diese Informationen austauschen kann mit dem Satellitenfahrzeug und auch Informationen von Sensoren und Aktoren desselben oder anderer Komponenten verarbeiten kann. Vorteiligerweise ist kein Koaxialkabel in der Strecke notwendig. Weiter vorteilig ist, dass bei jeder Geometrie der Anlage die Informationsübertragung sicher ausführbar ist, da die aufmodulierten Ströme von den Gegenständen der Umgebung im Wesentlichen unbeeinflusst sind - im Gegensatz zur Funkübertragung.

Weiter vorteilig ist auch, dass weitere stationäre oder bewegbare Komponenten induktiv an die Primärkomponenten ankoppelbar sind und somit ein Datenaustausch auch mit diesen Komponenten ausführbar ist. Mit der Erfindung ist also quasi ein spezielles Bussystem für ein Transportsystem geschafften, wobei die Busteilnehmer berührungslos Daten austauschen können über die Primärkomponenten, also das vorgesehene mittelfrequente Energie-Verteilungssystem.

Bei einer vorteilhaften Ausgestaltung ist der Antrieb der Hebebühne berührungslos mit Energie versorgt. Insbesondere ist der Antrieb des Satellitenfahrzeugs berührungslos mit Energie versorgt. Von Vorteil ist dabei, dass der Verschleiß und der Wartungsaufwand verringert sind.

Bei einer vorteilhaften Ausgestaltung ist vom Hauptfahrzeug an mindestens einen Primärleiter mindestens eines Regals mindestens einer Seitengasse Energie mindestens an einer Stelle berührungslos übertragbar. Von Vorteil ist dabei, dass nur dasjenige Regal oder diejenigen Regale bestromt werden, in welchen sich das Satellitenfahrzeug befindet. Andere Primärleitungen müssen nicht bestromt werden. Somit sind keine elektrischen Verteilungsvorrichtungen notwendig. Außerdem sind die Abstrahlung und die Kosten verringerbar.

Bei einer vorteilhaften Ausgestaltung ist zur berührungslosen Energieübertragung zumindest ein Übertragerkopf vorgesehen. Von Vorteil ist dabei, dass kompakt ausführbar ist und/oder mit einem hohen Wirkungsgrad.

Bei einer vorteilhaften Ausgestaltung ist das Hauptfahrzeug ein Einspeisegerät umfasst, das eine auf dem Hauptfahrzeug vorgesehenen Primärleitung speist, die induktiv gekoppelt ist mit einem Übertragerkopf, der mit einer Anschlussbox zur Impedanz-Kompensation verbunden ist, die zumindest eine in dem Satellitenfahrstreckenabschnitt vorgesehenen Primärleitung speist. Von Vorteil ist dabei, dass je nach Anwendung die Impedanz anpassbar ist.

Bei einer vorteilhaften Ausgestaltung umfasst das Hauptfahrzeug einen Primärleitung, die bei dem fluchtenden Ausrichten mit einem im Boden verlegten Übertragerkopf induktiv ankoppelbar ist, der über eine Anschlussbox zur Impedanzkompensation mit mindestens einer in einem Regal vorgesehenen Primärleitung verbunden ist. Von Vorteil ist dabei, dass die Position des Hauptfahrzeuges die Bestromung der Primärleiter der Regale steuert. Somit sind keine weiteren Verteilervorrichtungen notwendig.

Bei einer alternativ anders aufgebauten, vorteilhaften Ausgestaltung umfasst die Hebebühne eine Primärleitung, insbesondere einen als Primärleitung vorgesehenen Übertragerkopf, die bei dem fluchtenden Ausrichten des Hauptfahrzeugs und Vertikalpositionieren der Hebebühne mit einem am Regal vorgesehenen Übertragerkopf induktiv ankoppelbar ist, der über eine Anschlussbox zur Impedanzkompensation mit mindestens einer in einem Regal vorgesehenen Primärleitung verbunden ist. Insbesondere erfolgt die Bestromung des Primärleiters des jeweiligen Regals aus dem Hauptfahrzeug. Von Vorteil ist dabei, dass das Positionieren des Hauptfahrzeuges und der Hebebühne die Bestromung der Primärleiter der Regale steuert.

Bei einer vorteilhaften Ausgestaltung ist zumindest ein Übertragerkopf mit U-förmigem oder C-förmigem oder E-förmigem Ferritkern ausgeführt. Von Vorteil ist dabei, dass ein hoher Wirkungsgrad erreichbar ist.

Bei einer vorteilhaften Ausgestaltung umfasst zumindest ein Übertragerkopf eine Wicklung, die als Flachwicklung ausgeführt ist. Von Vorteil ist dabei, dass eine sehr kompakte Ausführung für das Regallager samt Hauptfahrzeug und Satellitenfahrzeug erreichbar ist.

Bei einer vorteilhaften Ausgestaltung ist die Flachwicklung um den mittleren Schenkel eines E-förmigen Kerns herum angeordnet. Von Vorteil ist dabei, dass trotz Flachwicklung ein hoher Wirkungsgrad bei der berührungslosen Energieübertragung erreichbar ist.

Bei einer vorteilhaften Ausgestaltung sind die Schenkel des E kürzer als der Abstand der nächstbenachbarten Schenkel zueinander. Von Vorteil ist dabei, dass die Ausführung sehr kompakt ist.

Bei einer vorteilhaften Ausgestaltung ist die Primärleitung als Hinleitung und Rückleitung ausgeführt oder als Hinleitung und ein zumindest teilweise umgebendes Profil. Von Vorteil ist dabei, dass je nach Anwendung das System der berührungslosen Energieübertragung anpassbar ist.

Weitere Vorteile ergeben sich aus den Unteransprüchen.

Die Erfindung wird nun anhand von Abbildungen näher erläutert:

Die Erfindung umfasst Systeme zur berührungslosen Energieübertragung, wie im Stand der Technik dargestellt. Insbesondere ist dabei am beweglichen Teil ein Übertragerkopf vorgesehen, der mindestens eine Wicklung umfasst. Das nicht-bewegliche Teil des Systems umfasst als Primärleitung zumindest einen Linienleiter und eine Rückleitung. Die Rückleitung ist entweder in einem Profil oder auch als Linienleiter ausführbar. Der Übertragerkopf ist induktiv gekoppelt an den oder die Linienleiter. Wenn die Rückleitung in einem Profil erfolgt, ist der Übertragerkopf derart ausgeführt, dass zumindest sein Ferritkern die linienhafte Hinleitung zumindest teilweise umgibt. Der Übertragerkopf ist demgemäß U-förmig oder C-förmig ausgeführt. Die Sekundärwicklung , also die Wicklung des Übertragerkopfes, ist um die Schenkel des U oder C herum ausgeführt. Wenn die Rückleitung als Linienleiter ausgeführt ist, ist der Ferritkern vorteiligerweise als E-förmiger Kern auszuführen, wobei die beiden Leitungen, also Hinleiter und Rückleiter, zwischen den Schenkeln des E angeordnet sind oder in Schenkelrichtung ein wenig von dieser Position beabstandet sind.

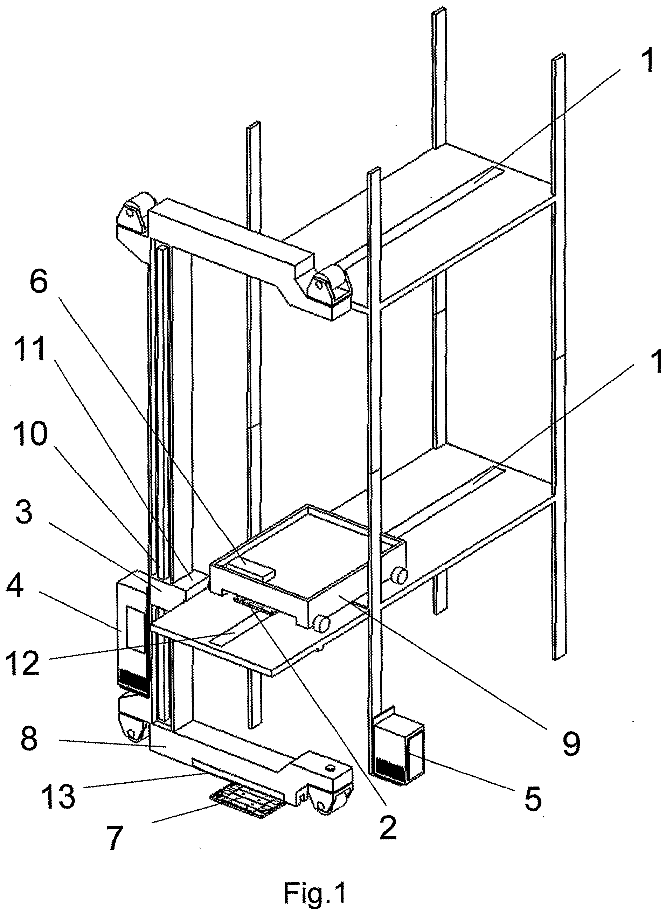

In der Figur 1 ist ein erfindungsgemäßes Regallager und zugehöriges Regalbediengerät gezeigt.

Das Regalbediengerät umfasst ein Hauptfahrzeug 8, auf dem ein Satellitenfahrzeug 9 vorgesehen ist, das von einer von einem Antrieb vertikal bewegbaren Hebebühne auf ein Regal des Regallagers verfahrbar ist. Das Regallager weist in Figur 1 zwei Regale auf.

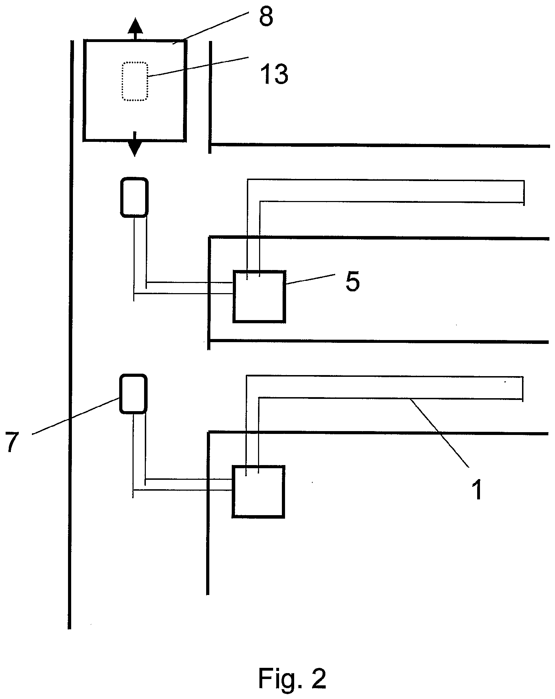

Die Regale sind übereinander in einer Seitengasse angeordnet. Weitere Seitengassen sind in Figur 2 symbolisch skizziert. In Figur 2 ist auch als Primärleitung der in einem Regal verlegte Linienleiter 1 mit Hin- und Rückleitung gezeigt, wobei diese Primärleitung mit einer Anschlussbox 5 elektrisch verbunden ist, die wiederum mit einem flachen Übertragerkopf 7, der im Boden fest angeordnet ist, verbunden ist. Die Anschlussbox 5 umfasst eine Elektronik zur Impedanz-Anpassung, die in Figur 3 beispielhaft gezeigt ist, wobei bei weiteren Ausführungsbeispielen auch ähnlich aufgebaute Schaltungen, die zumindest die Funktionen der Figur 3 umfassen, vorsehbar sind.

Auf der Hebebühne ist, wie in Figur 1 gezeigt, ein Linienleiter vorgesehen, der nach Erreichen der korrekten Höhe des Regals des Regallagers derart angeordnet ist, dass der in der Seitengasse sich befindende Linienleiter 1 in Flucht ist mit dem Linienleiter der Hebebühne. Somit ist es dem Satellitenfahrzeug ermöglicht, berührungslos mit Energie versorgt zu werden, insbesondere beim Fahren von der Hebebühne ins Regal hinein und zurück.

Zur Energieentnahme umfasst das Satellitenfahrzeug 9 einen flachen Übertragerkopf 2. Außerdem umfasst das Satellitenfahrzeug 9 eine Fahrzeugsteuerung, die aus dem Übertragerkopf 2 und einer damit elektrisch verbundenen, nicht gezeigten elektronischen Schaltung, die auch als Anpasssteller bezeichnet wird, versorgt wird. Bei weiteren erfindungsgemäßen Ausführungsbeispielen sind diese Komponenten auch integriert ausführbar und benötigen somit weniger Bauvolumen. Insbesondere ist ein Gehäuse für die integrierte Ausführung vorsehbar und somit die Masse reduzierbar, was zur Erhöhung der Dynamik des Fahrzeuges beiträgt.

Die Hebebühne ist vertikal beweglich und umfasst einen Antrieb hierzu, der berührungslos aus der Primärleitung des Hauptfahrzeuges versorgt ist. Dazu ist an der Hebebühne ein U-förmiger Übertragerkopf 3 vorgesehen und an dem Hauptfahrzeug als Primärleitung ein Linienleiter 10. Somit ist ein hoher Wirkungsgrad bei der Energieübertragung vorhanden. Der Raumbedarf für den U-förmigen Übertragerkopf stört nicht, da die berührungslose Energieversorgung seitlich am Hauptfahrzeug, also in Bewegungsrichtung angeordnet ist.

Der Antrieb des Hauptfahrzeugs und zumindest ein Einspeisegerät 4 sind mit nicht gezeigten Schleifleitungen elektrisch versorgt. Das Einspeisegerät 4 versorgt den vertikalen Linienleiter 10 und einen weiteren Linienleiter 13, der horizontal am Fahrzeugboden des Hauptfahrzeuges verlegt ist. Dieser weitere Linienleiter 13 wird ebenfalls aus dem Einspeisegerät 4 versorgt und ist derart angeordnet, dass bei Positionierung des Linienleiters 12 des Hauptfahrzeuges in Flucht zum Linieneileiter 1 der Seitengasse der Linienleiter 13 über einem flachen Übertragerkopf 7, der im Boden verlegt ist, positioniert ist. Somit ist von dem Linienleiter 13 Energie zu diesem flachen Übertragerkopf 7 übertragbar. Der flache Übertragerkopf 7 ist elektrisch mit der Anschlussbox 5 verbunden, die zur Verteilung an die Linienleiter 1 der Regale vorgesehen ist.

Das Satellitenfahrzeug umfasst zur Energieentnahme wiederum zumindest einen flachen Übertragerkopf 7, der an den Linienleiter der Hebebühne oder des Regals angekoppelt ist.

Da das Einspeisegerät entweder direkt oder indirekt beide Linienleiter versorgt, ist beim Herausfahren des Satellitenfahrzeuges aus der Hebebühne keine wesentliche Schwankung der Energieversorgung merklich.

Bei weiteren erfindungsgemäßen Ausführungsbeispielen umfasst das Satellitenfahrzeug 9 zur Energieentnahme mehrere flache Übertragerköpfe 2. Somit ist je nach Bedarf mehr Energie an das bewegliche Fahrzeugteil übertragbar.

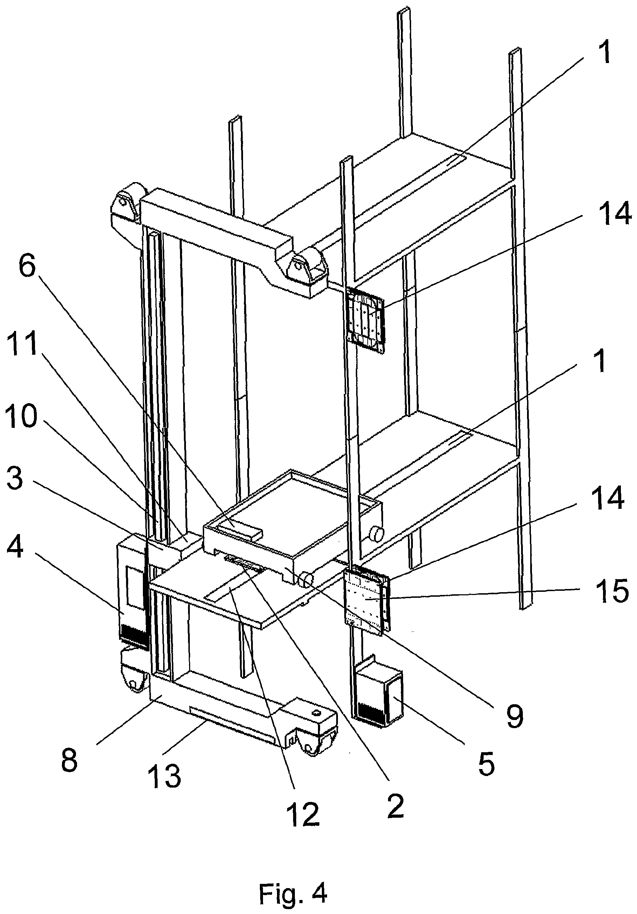

In der Figur 4 ist ein anderes erfindungsgemäßes Ausführungsbeispiel gezeigt, bei dem an der Hebebühne ein flacher Übertragerkopf 15 angebracht ist, welcher beim In-Flucht-Positionieren des Linienleiters 12 der Fahrstrecke des Satellitenfahrzeuges der Hebebühne und des Linienleiters 1 des Regals ebenfalls in Flucht positioniert ist vor einem mit dem Regal fest verbundenen flachen Übertragerkopf 14, der elektrisch mit dem Linienleiter 1 des Regals in Verbindung steht und diesen versorgt. Somit ist nur der jeweils benötigte Linienleiter 1 des jeweiligen Regals bestromt und es geht möglichst wenig Energie verloren.

Die Hebebühne umfasst die Anschlussbox 11, welche mit dem U-förmigen Übertragerkopf 3 elektrisch verbunden ist und den Linienleiter 12 der Hebebühne versorgt. In dem Ausführungsbeispiel nach Figur 4 versorgt die Anschlussbox 11 auch noch den flachen Übertragerkopf 15, der an der Hebebühne angebracht ist und bei dem In-Flucht-Positionieren den jeweiligen flachen Übertragerkopf 14 versorgt.

Figur 3 zeigt den Schaltplan der Anschlussbox 5. Dabei ist die Sekundärwicklung 7 des im Boden verlegten flachen Übertragerkopfes 7 der Figur 1 über einen Kondensator 16 zur Kompensation der Übertragerkopfinduktivität 7 mit der Primärwicklung des Anpasstransformators 17 verbunden. Dessen Sekundärwicklung ist über einen Kondensator 18 zur Kompensation der Strecke, also des Linienleiters 1, in Reihe mit dem Linienleiter 1 als Primärleiter verbunden. Somit sind die Impedanzen mittels der Kondensatoren 16 und 18 und mittels des Anpasstransformators 17 optimierbar.

In weiteren erfindungsgemäßen Ausführungsbeispielen ist statt der Versorgung des Hauptfahrzeuges mit Schleifleitung auch eine Versorgung mittels eines Systems für berührungslose Energieübertragung vorsehbar. Somit sind der Verschleiß und die Wartungskosten vorteiligerweise weiter reduzierbar.

In weiteren erfindungsgemäßen Ausführungsbeispielen sind statt zwei mehrere Regale vorsehbar, statt einer Hebebühne mehrere und statt einem Satellitenfahrzeug auch mehrere hiervon.

In weiteren erfindungsgemäßen Ausführungsbeispielen sind statt flachen Übertragerköpfen auch U-förmige oder C-förmige Übertragerköpfe verwendbar.

Die Erfindung bezieht sich nicht nur auf Regalbediengeräte sondern auch auf andere spurgeführte Transportsysteme mit wenigstens einer Fahrstrecke aus Trag- und Spurführungselementen, auf der wenigstens ein Transportfahrzeug als Hauptfahrzeug geführt ist, das Mittel zum selbsttätigen Fortbewegen längs der Fahrstrecke hat und auf das Energie von einem längs der Fahrstrecke verlegten Primärkreis berührungslos übertragen wird, wobei das Hauptfahrzeug eine Hebebühne umfasst, die von einem Antrieb, beispielsweise einem Elektromotor oder Getriebemotor, antreibbar ist und auf der sich mindestens ein Satellitenfahrzeug befindet, das ebenfalls einen Antrieb, wie beispielsweise einem Elektromotor oder Getriebemotor, zum selbsttätigen Fortbewegen längs einer weiteren Fahrstrecke umfasst und zum Gütertransport ausgebildet ist. Dabei ist die Fahrstrecke des Satellitenfahrzeugs gebildet aus einem ersten Teil, der zur Hebebühne gehört und als Satellitenfahrstreckenabschnitt bezeichnet werden kann, und zumindest einem weiteren Teil der zu einem Regal oder dergleichen gehört und als Satellitenfahrstrecke bezeichnet werden kann. Dabei ist in der Fahrstrecke des Satellitenfahrzeugs einerseits also in dem sich auf der Hebebühne befindenden Teil und andererseits in dem auf dem Regal sich befindenden Teil ein Primärleiter, wie beispielsweise ein Linienleiter oder eine Primärwicklung, vorgesehen.

Das Satellitenfahrzeug umfasst einen Übertragerkopf der mit dem Primärleiter induktiv gekoppelt ist und somit Energieübertragung berührungslos ermöglicht. Ebenso umfasst die Hebebühnen einen Übertragerkopf der mit einem Primärleiter, wie Linienleiter oder Primärwicklung, induktiv gekoppelt ist und somit die Hebebühne ebenfalls berührungslos mit Energie versorgbar ist. Der Übertragerkopf ist entweder U-förmig oder vorteiligerweise flach ausführbar. Bei der flachen Ausführung umfasst der Übertragerkopf eine Flachwicklung, die um den mittleren Schenkel eines E-förmigen Kerns herum angeordnet ist. Die Schenkel des E sind dabei sehr kurz ausführbar, weil die Flachwicklung nur eine geringe Höhe in Richtung der Schenkel des E hat. Die Primärleitung ist dabei als Hinleitung und Rückleitung ausgeführt. Im Vergleich zu einem U

Wesentlich ist bei der Erfindung weiter, dass die Bestromung des Primärleiters des jeweiligen Regals aus dem Hauptfahrzeug erfolgt und somit Verdrahtungsaufwand einsparbar ist. Außerdem muss kein aufwendiges Energieverteilen mit Verteilern oder sogar steuerbaren Verteilerkästen vorgesehen werde. Bei einem Regallager mit vielen Regalen sind daher die Einsparungen an Aufwand und Kosten sehr groß.

Die Primärleitung ist als lang gestreckte Leiteranordnung ausgebildet. Das Einspeisegerät 4 ist als Mittelfrequenzquelle zur Versorgung der angeschlossenen Primärleitungen ausgebildet.

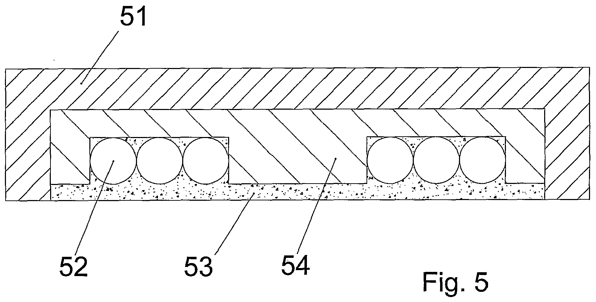

In Figur 5 ist ein beispielhafter flacher Übertragerkopf 2,7,14 im Querschnitt symbolisch gezeigt. Ein E-förmiger Planar-Kern 54 ist mit einer einlagigen Flachwicklung 52 bewickelt, die in einer Vergussmasse 53 vergossen ist. Der E-förmige Planar-Kern ist teilweise von einer Aluminiumplatte 51 umgeben. In weiteren erfindungsgemäßen Ausführungsbeispielen sind statt einlagiger auch mehrlagige Flachwicklungen vorsehbar.

In anderen erfindungsgemäßen Ausführungsbeispielen sind auch gleich wirkende Übertragerköpfe verwendbar, die nicht gleich sondern nur ähnlich aufgebaut sind.

Wesentlich ist bei der Erfindung, dass zur berührungslosen Informationsübertragung zwischen einer festen Station, dem Trägerfahrzeug und/oder dem Satellitenfahrzeug auf die Primärleiter und/oder den Primärkreis höherfrequent, insbesondere als Mittelfrequenz, aufmodulierte Ströme vorgesehen sind. Dazu ist die feste Station, das Trägerfahrzeug und/oder das Satellitenfahrzeug mit mindestens einer Koppeleinheit zum Ein- und/oder Auskoppeln der höherfrequenten Ströme ausgestattet.

Vorteiligerweise ist somit über den Primärkreis, die Primärleiter und die Übertragerköpfe nicht nur der mittelfrequente Strom zur Energieübertragung sondern auch der höher als mittelfrequente aufmodulierte Strom zur Datenübertragung vorsehbar. Bei einer Mittelfrequenz von 15 bis 30 kHz zur Energieübertragung ist für die Informationsübertragung ein Strom von mehr als 100kHz vorteilhaft. Es können aber auch Frequenzen aus dem MHz oder GHz -Bereich verwendet werden bei Berücksichtigung der Baugröße, Konstruktionsweise und Auslegung der gesamten Anlage.

Die Koppeleinheiten können vorwiegend induktiv oder vorwiegend kapazitiv ausgelegt sein. Beispielsweise kann am Übertragerkopf ein Hochpassfilter elektrisch angeschlossen sein zum Abtrennen der höherfrequenten Stromanteile, also zum Abtrennen eines aufmodulierten Stromanteils.

Vorteiligerweise ist kein Koaxialkabel in der Strecke notwendig. Weiter vorteilig ist, dass bei jeder Geometrie der Anlage die Informationsübertragung sicher ausführbar ist, da die aufmodulierten Ströme von den Gegenständen der Umgebung im Wesentlichen unbeeinflusst sind - im Gegensatz zur Funkübertragung.

Weiter ist ein wesentlicher Vorteil, dass zur Realisierung der berührungslosen Informationsübertragung keine zusätzlichen Bauteile innerhalb der Strecke vorzusehen sind. Denn die Übertragungsköpfe sind induktiv an die Primär-Komponenten ankoppelbar und somit auch geeignet zum berührungslosen Übertragen der aufmodulierten Stromanteile.

Bei der Erfindung ist es von Vorteil, dass über mehrere Übertragerköpfe, insbesondere 3, 14, 15, hinweg die Informationsübertragung ausführbar ist.

### Bezugszeichenliste

1 Linienleiter für Seitengasse
2 Übertragerkopf, flach
3 Übertragerkopf, U-förmig
4 Einspeisegerät
5 Anschlussbox
6 Fahrzeugsteuerung
7 Übertragerkopf, flach
8 Hauptfahrzeug
9 Satellitenfahrzeug
10 Hauptfahrzeug-Linienleiter, vertikal
11 Anschlussbox
12 Linienleiter, Hebebühne
13 horizontal am Fahrzeugboden verlegter Linienleiter am Hauptfahrzeug
14 Übertragerkopf, flach
15 Übertragerkopf, flach
16 Kondensator zur Kompensation
17 Anpasstrafo
18 Kondensator zur Kompensation der Strecke
51 Aluminiumplatte
52 Flachwicklung
53 Vergussmasse
54 Planar-Kern

## Patentansprüche

1. Spurgeführtes Transportsystem mit wenigstens einer Fahrstrecke aus Trag- und Spurführungselementen, auf der wenigstens ein Transportfahrzeug als Hauptfahrzeug (8) geführt ist, das Mittel zum selbsttätigen Fortbewegen längs der Fahrstrecke hat und auf das Energie von einem längs der Fahrstrecke verlegten Primärkreis mit Schleifleitung oder berührungslos übertragen wird,
wobei das Hauptfahrzeug (8) eine Hebebühne umfasst, die von einem Antrieb, insbesondere beispielsweise einem Elektromotor oder Getriebemotor, antreibbar ist und auf der sich mindestens ein Satellitenfahrzeug (9) befindet, das ebenfalls einen Antrieb, wie beispielsweise einem Elektromotor oder Getriebemotor, zum selbsttätigen Fortbewegen längs einer weiteren Fahrstrecke umfasst und zum Gütertransport ausgebildet ist,
wobei die Fahrstrecke einen Satellitenfahrstreckenabschnitt umfasst für die Positionierung und das Parken des Satellitenfahrzeuges (9),
wobei der Satellitenfahrstreckenabschnitt durch Positionierung des Hauptfahrzeuges (9) auf längs dessen Fahrstrecke, quer zu dieser angeordnete Satellitenfahrstrecken fluchtend ausrichtbar ist, wobei diese Satellitenfahrstrecken auf Regalen angeordnet sind,
**dadurch gekennzeichnet, dass** Satellitenfahrstreckenabschnitte und Satellitenfahrstrecken Primärleiter (1) umfassen, die berührungslos mit Energie versorgt sind aus dem Hauptfahrzeug (8), wobei zur berührungslosen Informationsübertragung zwischen einer festen Station, einem Hauptfahrzeug (8) und/oder einem Satellitenfahrzeug (9) auf die Primärleiter (1) und/oder den Primärkreis höherfrequent, insbesondere als Mittelfrequenz, aufmodulierte Ströme vorgesehen sind,
wobei vom Hauptfahrzeug (8) an mindestens einen Primärleiter (1) mindestens eines Regals mindestens einer Seitengasse Energie mindestens an einer Stelle berührungslos übertragbar ist

2. Transportsystem nach Anspruch 1,
**dadurch gekennzeichnet, dass**
die feste Station, das Hauptfahrzeug (8) und/oder das Satellitenfahrzeug (9) mindestens eine Koppeleinheit zum Ein- und/oder Auskoppeln der höherfrequenten Ströme aufweisen.

3. Transportsystem nach mindestens einem der vorangegangenen Ansprüche,
**dadurch gekennzeichnet, dass**
der Antrieb der Hebebühne berührungslos mit Energie versorgt ist.

4. Transportsystem nach mindestens einem der vorangegangenen Ansprüche,
**dadurch gekennzeichnet, dass**
der Antrieb des Satellitenfahrzeugs (9) berührungslos mit Energie versorgt ist.

5. Transportsystem nach mindestens einem der vorangegangenen Ansprüche,
**dadurch gekennzeichnet, dass**
zur berührungslosen Energieübertragung zumindest ein Übertragerkopf (2,3,7,14,15) vorgesehen ist.

6. Transportsystem nach mindestens einem der vorangegangenen Ansprüche,
**dadurch gekennzeichnet, dass**
das Hauptfahrzeug (8) ein Einspeisegerät (4) umfasst, das eine auf dem Hauptfahrzeug (8) vorgesehenen Primärleitung (10) speist, die induktiv gekoppelt ist mit einem Übertragerkopf (3), der mit einer Anschlussbox (11) zur Impedanz-Kompensation verbunden ist, die zumindest eine in dem Satellitenfahrstreckenabschnitt vorgesehenen Primärleitung (1) speist.

7. Transportsystem nach mindestens einem der vorangegangenen Ansprüche,
**dadurch gekennzeichnet, dass**
das Hauptfahrzeug (8) einen Primärleitung (13) umfasst, die bei dem fluchtenden Ausrichten mit einem im Boden verlegten Übertragerkopf (7) induktiv ankoppelbar ist, der über eine Anschlussbox (5) zur Impedanzkompensation mit mindestens einer in einem Regal vorgesehenen Primärleitung (1) verbunden ist.

8. Transportsystem nach mindestens einem der Ansprüche 1 bis 6,
**dadurch gekennzeichnet, dass**
die Hebebühne eine Primärleitung, (12) insbesondere einen als Primärleitung vorgesehenen Übertragerkopf, (15) umfasst, die bei dem fluchtenden Ausrichten des Hauptfahrzeugs (8) und Vertikalpositionieren der Hebebühne mit einem am Regal vorgesehenen Übertragerkopf (14) induktiv ankoppelbar ist, der über eine Anschlussbox (5) zur Impedanzkompensation mit mindestens einer in einem Regal vorgesehenen Primärleitung (1) verbunden ist.

9. Transportsystem nach mindestens einem der vorangegangenen Ansprüche,
**dadurch gekennzeichnet, dass**
die Bestromung des Primärleiters (1) des jeweiligen Regals aus dem Hauptfahrzeug (8) erfolgt.

10. Transportsystem nach mindestens einem der vorangegangenen Ansprüche,
**dadurch gekennzeichnet, dass**
zumindest ein Übertragerkopf (2,3,7,14,15) mit U-förmigem oder C-förmigem oder E-förmigem Ferritkern ausgeführt ist.

11. Transportsystem nach mindestens einem der vorangegangenen Ansprüche,
**dadurch gekennzeichnet, dass**
zumindest ein Übertragerkopf (2,3,7,14,15) eine Wicklung umfasst, die als Flachwicklung (52) ausgeführt ist.

12. Transportsystem nach mindestens einem der vorangegangenen Ansprüche,
**dadurch gekennzeichnet, dass**
die Flachwicklung (52) um den mittleren Schenkel eines E-förmigen Kerns herum angeordnet ist.

13. Transportsystem nach mindestens einem der vorangegangenen Ansprüche,
**dadurch gekennzeichnet, dass**
die Schenkel des E kürzer sind als der Abstand der nächstbenachbarten Schenkel zueinander.

14. Transportsystem nach mindestens einem der vorangegangenen Ansprüche,
**dadurch gekennzeichnet, dass**
die Primärleitung (1) als Hinleitung und Rückleitung ausgeführt ist oder als Hinleitung und ein zumindest teilweise umgebendes Profil.

## Claims

1. A rail-guided transport system having at least one track comprising supporting and rail-guidance elements on which at least one transport vehicle is guided as a main vehicle (8), which vehicle has means for automatic movement along the track, energy being transmitted to said vehicle from a primary circuit installed along the track by a contact line or in a contactless manner,
wherein the main vehicle (8) comprises a lifting platform which may be driven by a drive, in particular an electric motor or geared motor, for example, and on which at least one satellite vehicle (9) is located, which likewise comprises a drive, for example an electric motor or geared motor, for automatic movement along a further track and is designed for transporting goods,
wherein the track comprises a satellite track section for positioning and parking the satellite vehicle (9) wherein, by positioning the main vehicle (9), the satellite track section may be brought into flush alignment with satellite tracks arranged along its track, transversely thereto, wherein these satellite tracks are arranged on shelves,
**characterised in that**
satellite track sections and satellite tracks comprise primary conductors (1) which are supplied with energy from the main vehicle (8) in a contactless manner,
wherein currents modulated to higher frequency, in particular higher than medium frequency, are provided for the contactless transmission of information between a fixed station, a main vehicle (8) and/or a satellite vehicle (9) to the primary conductor (1) and/or the primary circuit,
wherein, at least at one point, energy may be transmitted in a contactless manner from the main vehicle (8) to at least one primary conductor (1) of at least one shelf of at least one side aisle.

2. The transport system according to Claim 1,
**characterised in that**
the fixed station, the main vehicle (8) and/or the satellite vehicle (9) have at least one coupling unit for coupling and/or decoupling the higher-frequency currents.

3. The transport system according to at least one of the preceding claims,
**characterised in that**
the drive of the lifting platform is supplied with energy in a contactless manner.

4. The transport system according to at least one of the preceding claims,
**characterised in that**
the drive of the satellite vehicle (9) is supplied with energy in a contactless manner.

5. The transport system according to at least one of the preceding claims,
**characterised in that**
at least one transmitter head (2, 3, 7, 14, 15) is provided for the contactless transmission of energy.

6. The transport system according to at least one of the preceding claims,
**characterised in that**
the main vehicle (8) comprises a feed device (4) which feeds a primary line (10) provided on the main vehicle (8), which primary line is inductively coupled to a transmitter head (3) connected to a junction box (11) for impedance compensation, which feeds at least one primary line (1) provided in the satellite track section.

7. The transport system according to at least one of the preceding claims,
**characterised in that**
the main vehicle (8) comprises a primary line (13) which, during the flush alignment, may be inductively coupled to a transmitter head (7) installed in the floor, which is connected via a junction box (5) to at least one primary line (1) provided in a shelf for impedance compensation.

8. The transport system according to at least one of Claims 1 to 6,
**characterised in that**
the lifting platform comprises a primary line (12), in particular a transmitter head (15) provided as a primary line, which, during the flush alignment of the main vehicle (8) and the vertical positioning of the lifting platform, may be inductively coupled to a transmitter head (14) provided on the shelf, which is connected via a junction box (5) to at least one primary line (1) provided in a shelf for impedance compensation.

9. The transport system according to at least one of the preceding claims,
**characterised in that**
the primary line (1) of the respective shelf is supplied with current from the main vehicle (8).

10. The transport system according to at least one of the preceding claims,
**characterised in that**
at least one transmitter head (2, 3, 7, 14, 15) is designed with a U-shaped or C-shaped or E-shaped ferrite core.

11. The transport system according to at least one of the preceding claims,
**characterised in that**
at least one transmitter head (2, 3, 7, 14, 15) comprises a winding which is designed as a flat winding (52).

12. The transport system according to at least one of the preceding claims,
**characterised in that**
the flat winding (52) is arranged around the centre limb of an E-shaped core.

13. The transport system according to at least one of the preceding claims,
**characterised in that**
the limbs of the E are shorter than the mutual spacing of the closest adjacent limbs.

14. The transport system according to at least one of the preceding claims,
**characterised in that**
the primary line (1) is designed as a feed line and return line or as a feed line and an at least partially surrounding profile.

## Revendications

1. Système de transport guidé comprenant au moins un parcours doté d'éléments porteurs et d'éléments de guidage, au moins un véhicule de transport en tant que véhicule principal (8) se déplaçant par guidage sur ce parcours et étant équipé de moyens pour son déplacement automatique le long du parcours, et un circuit primaire disposé le long du parcours lui transmettant de l'énergie au moyen d'une ligne de contact ou sans contact,
sachant que le véhicule principal (8) comprend une plate-forme de levage, qui peut être entraînée par un entraînement, en particulier par exemple un moteur électrique ou un motoréducteur, et sur laquelle se trouve au moins un véhicule satellite (9), qui comprend lui aussi un entraînement, comme par exemple un moteur électrique ou un motoréducteur, pour se déplacer automatiquement le long d'un autre parcours et qui est conçu pour transporter des marchandises,
sachant que le parcours comprend un tronçon de parcours satellite pour le positionnement et le stationnement du véhicule satellite (9),
sachant que le tronçon de parcours satellite peut, en positionnant le véhicule principal (9), être orienté en alignement avec des parcours satellites disposés le long du parcours du véhicule principal et transversalement à ce parcours, sachant que ces parcours satellites sont disposés sur des rayonnages,
**caractérisé en ce que** les tronçons de parcours satellites et les parcours satellites comprennent des conducteurs primaires (1) qui sont alimentés en énergie sans contact à partir du véhicule principal (8),
sachant que, pour la transmission d'informations sans contact entre une station fixe, un véhicule principal (8) et/ou un véhicule satellite (9), il est prévu des courants modulés sur les conducteurs primaires (1) et/ou sur le circuit primaire à une fréquence plus élevée, en particulier sous forme de moyenne fréquence,
sachant qu'à partir du véhicule principal (8), on peut transmettre de l'énergie sans contact en au moins un endroit sur au moins un conducteur primaire (1) d'au moins un rayonnage d'au moins une voie latérale.

2. Système de transport selon la revendication 1, **caractérisé en ce que** la station fixe, le véhicule principal (8) et/ou le véhicule satellite (9) présentent au moins une unité de couplage pour coupler et/ou découpler les courants à fréquence plus élevée.

3. Système de transport selon au moins une des revendications précédentes, **caractérisé en ce que** l'entraînement de la plate-forme de levage est alimenté en énergie sans contact.

4. Système de transport selon au moins une des revendications précédentes, **caractérisé en ce que** l'entraînement du véhicule satellite (9) est alimenté en énergie sans contact.

5. Système de transport selon au moins une des revendications précédentes, **caractérisé en ce qu'**au moins une tête de transmission (2, 3, 7, 14, 15) est prévue pour la transmission d'énergie sans contact.

6. Système de transport selon au moins une des revendications précédentes, **caractérisé en ce que** le véhicule principal (8) comprend un appareil d'alimentation (4) qui alimente une ligne primaire (10) prévue sur le véhicule principal (8), laquelle est couplée par induction à une tête de transmission (3) qui est reliée à une boîte de raccordement (11) pour la compensation d'impédance, boîte qui alimente au moins une ligne primaire (1) prévue dans le tronçon de parcours satellite.

7. Système de transport selon au moins une des revendications précédentes, **caractérisé en ce que** le véhicule principal (8) comprend une ligne primaire (13) qui, lors de l'orientation d'alignement, peut être couplée par induction à une tête de transmission (7) posée dans le sol, laquelle est reliée, par l'intermédiaire d'une boîte de raccordement (5) pour la compensation d'impédance, à au moins une ligne primaire (1) prévue dans un rayonnage.

8. Système de transport selon au moins une des revendications 1 à 6, **caractérisé en ce que** la plate-forme de levage comprend une ligne primaire (12), en particulier une tête de transmission (15) prévue comme ligne primaire, qui, lors de l'orientation d'alignement du véhicule principal (8) et du positionnement vertical de la plate-forme de levage, peut être couplée par induction à une tête de transmission (14) prévue sur le rayonnage, laquelle est reliée, par l'intermédiaire d'une boîte de raccordement (5) pour la compensation d'impédance, à au moins une ligne primaire (1) prévue dans un rayonnage.

9. Système de transport selon au moins une des revendications précédentes, **caractérisé en ce que** la mise sous tension du conducteur primaire (1) du rayonnage respectif s'effectue à partir du véhicule principal (8).

10. Système de transport selon au moins une des revendications précédentes, **caractérisé en ce qu'**au moins une tête de transmission (2, 3, 7, 14, 15) est réalisée avec un tore de ferrite en forme de U ou en forme de C ou en forme de E.

11. Système de transport selon au moins une des revendications précédentes, **caractérisé en ce qu'**au moins une tête de transmission (2, 3, 7, 14, 15) comprend un bobinage qui est réalisé sous forme de bobinage plat (52).

12. Système de transport selon au moins une des revendications précédentes, **caractérisé en ce que** le bobinage plat (52) est disposé tout autour de la branche médiane d'un noyau en forme de E.

13. Système de transport selon au moins une des revendications précédentes, **caractérisé en ce que** les branches du E sont plus courtes que la distance entre les branches immédiatement voisines.

14. Système de transport selon au moins une des revendications précédentes, **caractérisé en ce que** la ligne primaire (1) est réalisée sous la forme d'une ligne d'amenée et d'une ligne de retour, ou sous la forme d'une ligne d'amenée et d'un profilé l'entourant au moins partiellement.
